# EUROPEAN PATENT APPLICATION

(11) **EP 4 803 270 A1**
(43) Date of publication of application: **09.09.2026**
(21) Application number: 26162582.6
(22) Date of filing: 05.03.2026
(51) Int. Cl.: B25J 9/16, G05B 19/409, G05B 19/042

(54) **SYSTEMS AND METHODS FOR CONFIGURING AN AUTOMATION STATION**

(30) Priority: 07.03.2025 US 202563768323 P
(71) Applicant: ATS Corporation, Cambridge, ON N3H 4R7 (CA)
(72) Inventor: MUNROE, Phil David, Cambridge, Ontario, N3H 4R7 (CA); CAVALCANTE de OLIVEIRA, Julia Magnan, Cambridge, Ontario, N3H 4R7 (CA); MACGREGOR, Robert James, Cambridge, Ontario, N3H 4R7 (CA); TRAN, Hang Thu Thi, Cambridge, Ontario, N3H 4R7 (CA)
(74) Representative: Noble, Nicholas

(57) **Abstract**

An automation station can be used to repeatedly perform one or more tasks, typically at high speed. An automation station may include a plurality of servo motors that can be controlled according to a desired position. The automation station may further include one or more actuators that can be turned on/off, latched/unlatched, etc. The operation of the automation station requires that the operation of the servo motors and the actuators be coordinated in order to perform the desired actions. Configuring the automation station may be performed using a user interface that allows the operation of actuators to be linked to the control of the servo motors.

## Description

### RELATED APPLICATION

The current application claims priority to US Provisional Application No. 63/768,323 filed March 7, 2025 entitled "Systems And Methods For Configuring An Automation Station," the entire contents of which are incorporated herein by reference for all purposes.

### TECHNICAL FIELD

The current disclosure relates to automation stations and in particular to configuring the operation of the automation stations.

### BACKGROUND

A wide range of applications including manufacturing, assembly, testing, packaging, etc. can be automated or semi-automated. An automation station may include various components for performing one or more actions. The components of an automation station may include components that are controlled by servo motors or other actuators controlled according to a position. Movement of the servos can be controlled by specifying a position of the servo at particular times. The position-controlled servo devices may include for example, robotic arms, dials, or other devices whose motion can be controlled through a range of positions.

In addition to the position-controlled servo devices, automation stations further include one or more binary-controlled actuators. The binary-controlled actuators are controlled in an on/off manner. The binary-controlled actuators may include various devices such as fans, vacuums, pneumatic actuators, lights, cameras, grippers, etc.

In order for the automation station to operate correctly, the operation of the individual position-controlled servos and binary-controlled actuators need to be controlled in a coordinated manner. For example, the servos may be controlled to repeatedly move an arm between a pick location and a place location. A gripper actuator may be controlled in order to latch on to the part when the arm is at the pick location in order to pick-up a part and unlatch when at the place location in order to drop the part.

It is generally desirable for the automation station to operate as fast as possible in order to maximize throughput. However, coordinating operation of all of the components of an automation station at high speed can be difficult and can require repeated adjustments to the control in order for the automation station to operate as desired.

An additional, alternative and/or improved method of controlling an automation station is desirable.

### BRIEF DESCRIPTION OF THE DRAWINGS

Further features and advantages of the present disclosure will become apparent from the following detailed description, taken in combination with the appended drawings, in which:
FIG. 1 depicts control of an automation station;
FIG. 2 depicts configuration details of an automation station;
FIG. 3 depicts further details of configuring control of an automation station;
FIG. 4 depicts an illustrative user interface for configuring control of an automation station;
FIG. 5 depicts a further illustrative user interface for configuring control of an automation station; and
FIG. 6 depicts a method for configuring control of an automation station.

### DETAILED DESCRIPTION

In accordance with the present disclosure there is provided a method of configuring an automation station comprising: generating one or more position cam objects of servo controlled axes of the automation station, each of the one or more position cam objects comprising one or more motion segments specifying a position of the respective servo controlled axis at one or more time intervals; displaying a representation of at least one of the one or more position cam objects on a graphical display; generating one or more output cam objects by, for each output cam object: identifying a motion segment of the one or more motion segments of one of the one or more position cam objects; defining a latching condition and an unlatching condition, at least one of the latching and unlatching condition based on the identified motion segment; and generating the output cam object including the defined latching condition and the unlatching condition; displaying a representation of the output cam objects on the graphical display; generating one or more configuration files based on the one or more position cam objects and one or more output cam objects, the one or more configuration files specifying control information for the automation station at a plurality of time intervals of a cycle of the automation station; and controlling the automation station according to the generated one or more configuration files.

In accordance with a further embodiment of the method, the at least one latching and unlatching condition based on the identified motion segment is further defined by an offset of the identified motion segment.

In accordance with a further embodiment of the method, latching conditions of the one or more output cam objects are defined based on one or more of: a position of a master cam signal; a specified enable bit; and a combination of the position of the master cam signal and the specified enable bit.

In accordance with a further embodiment of the method, unlatching conditions of the one or more output cam objects are defined based on one or more of: a position of a master cam signal; a specified enable bit; a duration; a combination of the position of the master cam signal and the specified enable bit; and a combination of the duration and the specified enable bit.

In accordance with a further embodiment of the method, generating at least one of the one or more position cam objects comprises importing a position cam from a configuration file.

In accordance with a further embodiment of the method, the method further comprises generating a new output cam object by: selecting displayed representation of an existing output cam object; generating the new output cam object based on the selected existing output cam object; and adjusting one or more characteristics of the new output cam object.

In accordance with the present disclosure there is provided an automation station comprising: a plurality of servos; one or more actuators; a controller configurable for controlling the plurality of servos and the one or more actuators; a computing device configured to configure the controller according to one or more configuration files, the computing device configured to perform a method comprising: generating one or more position cam objects of servo controlled axes of the automation station, each of the one or more position cam objects comprising one or more motion segments specifying a position of the respective servo controlled axis at one or more time intervals; displaying a representation of at least one of the one or more position cam objects on a graphical display; generating one or more output cam objects by, for each output cam object: identifying a motion segment of the one or more motion segments of one of the one or more position cam objects; defining a latching condition and an unlatching condition, at least one of the latching and unlatching condition based on the identified motion segment; and generating the output cam object including the defined latching condition and the unlatching condition; displaying a representation of the output cam objects on the graphical display; generating one or more configuration files based on the one or more position cam objects and one or more output cam objects, the one or more configuration files specifying control information for the automation station at a plurality of time intervals of a cycle of the automation station; and controlling the automation station according to the generated one or more configuration files.

In a further embodiment of the automation station, the at least one latching and unlatching condition based on the identified motion segment is further defined by an offset of the identified motion segment.

In a further embodiment of the automation station, latching conditions of the one or more output cam objects are defined based on one or more of: a position of a master cam signal; a specified enable bit; and a combination of the position of the master cam signal and the specified enable bit.

In a further embodiment of the automation station, unlatching conditions of the one or more output cam objects are defined based on one or more of: a position of a master cam signal; a specified enable bit; a duration; a combination of the position of the master cam signal and the specified enable bit; and a combination of the duration and the specified enable bit.

In a further embodiment of the automation station, generating at least one of the one or more position cam objects comprises importing a position cam from a configuration file.

In a further embodiment of the automation station, the automation station further comprises generating a new output cam object by: selecting displayed representation of an existing output cam object; generating the new output cam object based on the selected existing output cam object; and adjusting one or more characteristics of the new output cam object.

An automation station can be used to repeatedly perform one or more tasks, typically at high speed. An automation station can include servos, motors or the like, which are referred to as servos below for brevity, that can be controlled to move through a range of positions or orientations. The servos are controlled by specifying specific positions or orientations of the servo at specific times throughout the operating cycle of the automation station. The automation station may further include one or more actuators that are controlled by specifying a state of the actuator, such as on/off, latched/unlatched, etc. at specific times throughout the operating cycle of the automation station.

The automation station performs a task, or tasks, repeatedly, such as repeatedly picking and placing a component, etc. The operating cycle of the automation station may take varying lengths of time from fractions of a second to tens of seconds, minutes or more. The specific control configuration data may specify the position of servos and state of actuators at specific times over the operating cycle. The number of time intervals in the control configuration data may vary depending on the length of the operating cycle and the precision in the control of components. For example, the control configuration data may control the position of servos and the state of actuators at tens, hundreds, thousands or more time intervals. The control configuration data for the components of the automation station may be loaded to a programmable logic controller (PLC) that controls the automation station components.

As described further below, the motion of the servos can be defined in a graphical user interface and the state of the actuators may be specified in the user interface. The user interface allows the state of one or more of the actuators to be specified relative to portions of the motion control of the servos. The configuration process described further below can greatly simplify the configuration process. Further, the configuration process can improve the operation of the automation station as configuration process described further below reduces the possibilities of introducing errors in the control configuration data that can make the optimization of the automation station difficult.

In controlling an automation station, operation of the individual components may be synchronized to a master signal. The automation station performs a repeated cycle and so the control may be specified relative to 360°. The master signal may be referred to as a master cam. Similarly, the motion of each individual servo axis of the automation station may be referred to as position cams while the control of the individual actuators may be referred to as output cams.

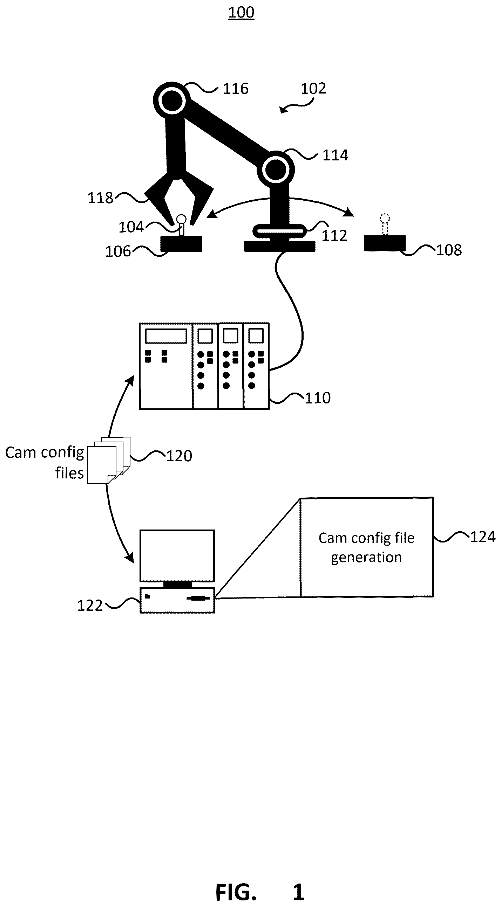

FIG. 1 depicts control of an automation station. The system 100 includes an automation station that includes a robotic arm 102. The robotic arm is depicted as picking up a component 104 from a pick location 106 and moving it to a place location 108. The automation station includes a controller, depicted as a PLC 110 that controls the operation of the robotic arm 102. The robotic arm includes a number of servo controlled axis 112, 114, 116 about which the arm can rotate. The robotic arm further includes an actuator depicted as a gripper 118 that can be actuated in order to grip/release the part.

In order to control operation of the robotic arm 102, one or more configuration files, referred to as cam config files, 120 can be loaded onto the controller. The cam config files 120 define the position cams for the robotic servos and the output cam for the gripper actuator. The cam config files 120 may specify the configuration data in various formats depending upon the requirements of the PLC 110. Further, although described as config files, the configuration data may be specified in a single file.

As depicted, the cam config files 120 can be loaded onto the PLC from a computer 122. Although depicted as a desktop computer, other computing devices may be used. Further, although not depicted in FIG. 1 the computing device may be communicatively coupled with the PLC via one or more communication networks. The networks may be provided as wired and/or wireless networks. Additionally or alternatively, the cam config files 120 may be loaded onto the PLC using other techniques such as a memory that can be connected to the computer 122 and the PLC 110. In addition to facilitating the transfer of the cam config files 120 to the PLC, the computing device 122 includes cam config file generation functionality 124 that provides an interface for generating the cam config files.

The cam config file generation functionality 124 represents the motion of the robotic arm as a plurality of position cam objects. The position cam objects may define a plurality of motion segments over the automation cycle. For example, one segment for an arm may comprise a linear movement of a servo from a first position to a second position and a second segment may move the servo back to the first position from the second position. The cam config file generation functionality may generate representations of the position cam objects for display to a user. The cam config file generation functionality may further allow the user to generate the output cam objects. Each output cam object may define one or more instances of activating, or deactivating, the associated actuator. While there are a wide range of options for defining the output cam objects, the cam config file generation functionality may allow output cam objects to be linked to one or more segments of a position cam object. By linking an output cam object instance to a position cam object segment, it is possible to adjust the motion of a servo defined by the position cam object and have the linked actuator updated accordingly. Using the robotic arm 102 as an example, position cam objects may define the motion of the robotic arm in order to position the gripper over the pick location 106, dwell for a period of time to allow the gripper to be activated to pick up an object, and then move to position the gripper to the place location 108, where the arm may dwell for a period of time to allow the gripper to release the object. The activation/deactivation of the gripper can be linked by the cam config file generation functionality to the dwell segments of the robotic arm's movement. As such, if the motion of the arm is changed, for example by speeding up, or slowing down its motion, the activation of the gripper can be automatically updated to activate at the revised dwell time.

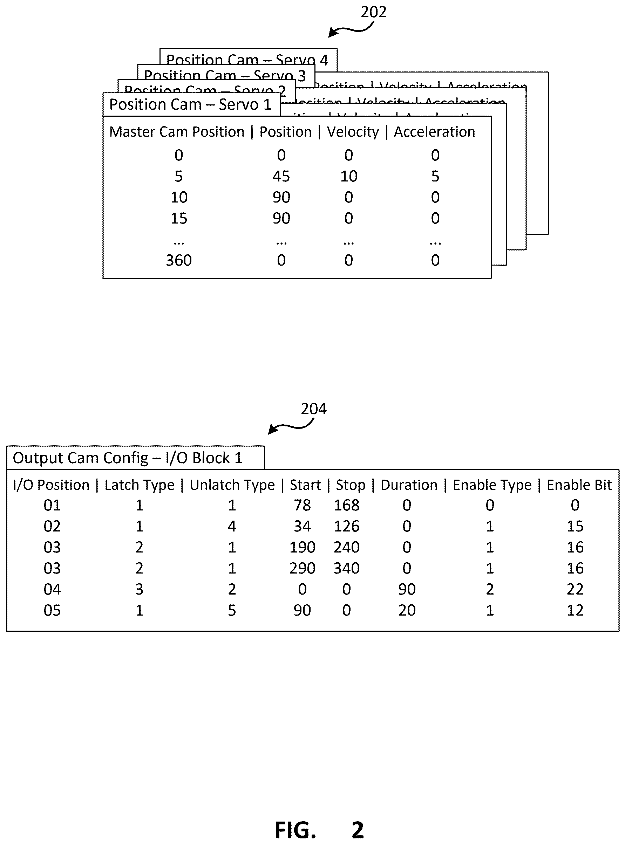

FIG. 2 depicts cam config file details of an automation station. The cam config file details include position cam config data and output cam config data. The config data may be specified in various ways including as one or more tables as depicted in FIG. 2. The config tables may include for example a plurality of position cam config tables 202 and one or more output cam config tables 204. As depicted, each position cam config table may be associated with controlling an individual servo, or other position-controlled device. As depicted in FIG. 2, the position cam for a servo may be specified relative to a master cam position, which is depicted as defining a plurality of cam positions. It is noted that in FIG. 2, the master cam positions are depicted as being 5° increments; however, in practice the master cam positions may be defined over a much smaller increments. Further, while depicted as being defined relative to a cam position between 0° and 360° it may be possible to specify the cam positions relative to some multiple of 360°. Further, rather than using a master cam position in degrees, it is possible to define the increments in other dimensions including for example a length or time. For each master cam position, whether specified in degrees, a length, or time, the position cam table may specify one or more motion details of the servo. As depicted, the position cam table can specify the position, velocity and acceleration of the servo at each master cam position.

FIG. 2 further depicts an output cam config table 204, which depicts output cam instances for a plurality of actuators. The output cam config table 204 may be defined for a plurality of actuators that are connected to a common input/output interface of a PLC. For example, a single I/O interface may include a number, such as 16 or 32, outputs that can be individually controlled in order to turn on/off a respective actuator. As depicted, a row of the output cam config table can specify details of an output cam instance. Each instance may define the I/O position that the actuator is connected to as well as characteristics of the instance. Each instance can define the latching type or conditions that will activate the actuator and the unlatching type or conditions that will deactivate the actuator. The latch and unlatch type are depicted as a number in FIG. 2. The number may be associated with particular latching conditions. For example, the latching conditions may be defined as set forth below.

| **Latch type** | **Latch type name** | **Description** |
|---|---|---|
| 1 | Position | Activated based on the master cam position |
| 2 | Enable | Activated based on a particular enable bit |
| 3 | Position and Enable | Activated based on the master cam position and the particular enable bit |

The unlatching conditions may be defined as set forth below:

| **Unlatch type** | **Unlatch type name** | **Description** |
|---|---|---|
| 1 | Position | Deactivated based on the master cam position |
| 2 | Duration | Deactivated based on a specified duration from activation |
| 3 | Enable | Deactivated based on a particular enable bit |
| 4 | Position and Enable | Deactivated based on the master cam position and enable bit |
| 5 | Duration and Enable | Deactivated based on the specified |

It will be appreciated that other latching and unlatching conditions can be defined. For the latching based on the position, the output cam instance may specify the position of the master cam that the actuator is activated. Similarly, for the unlatching condition based on the position may specify a stop position of the master cam that the actuator is deactivated at. Similarly, when the unlatch type is based on the duration, a time duration can be specified that the actuator should remain activated for. The latching/unlatching may also be based on one or more enable bits. The enable bits may comprise a particular bit that may be set by the controller based on various conditions. As a simple example, a bit may be set based on a temperature of the automation system, with the bit being set when the temperature rises above a threshold. The enable bit may be used to control operation of a fan. When the latching/unlatching is based on an enable bit, the enable bit and type may be specified. The enable type, may define whether the activation is based on the enable bit, or the inverse of the enable bit.

Further conditions may be specified in the output cam config table. For example, in addition to specifying the I/O position, the output type may be specified as either being a regular output or an inverted output. Other conditions may be specified as required by the actuators. In addition to providing additional conditions, some of the conditions depicted in FIG. 2 may be omitted, hidden from users, or set to default values. For example, the enable bit may not be used, or the enable bit may be used but is hidden from users and set to a default value indicating that the enable bit is not inverted.

As will be appreciated, it is possible for a user to create the output cam config tables depicted in FIG. 2 directly using various editors or other software such as Excel^{®}. While it is possible to define the tables directly, it can become difficult to create the tables as the number of servos and actuators increase. As described in further detail below, the tables may be generated based on a plurality of generated position cam objects and output cam objects, which can be more easily created and manipulated by the user.

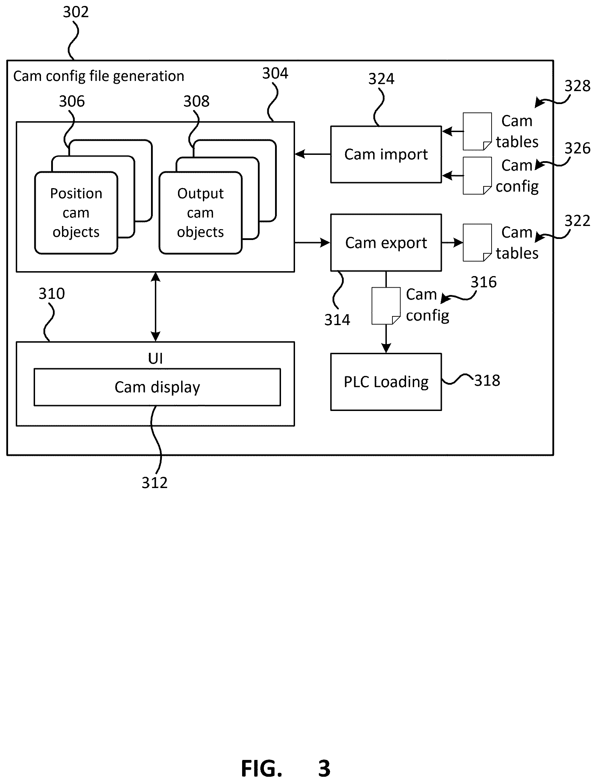

FIG. 3 depicts further details of configuring control of an automation station. The cam config file generation functionality 302 may be used to generate the required configuration files for the PLC controlling the automation station. The cam config file generation functionality 302 can provide a graphical user interface that allows a user, or users to define the motion of the automation station. The cam config file generation functionality includes a plurality of cam objects 304 that can be created by the user. The cam objects may include position cam objects 306 and output cam objects 308.

The position cam objects may each be associated with a respective control axis of the automation station. The control axis may be a real or virtual axis. A real axis may correspond to a physical servo of the automation station, whereas a virtual axis may correspond to one or more physical servos. The motion of the virtual axis can be mapped to corresponding motion of the one or more physical servos. For example, a delta robot is one in which three servo-controlled arms are connected to a common base by a universal joint. Motion of the base can be controlled in 3D space by appropriate control of the three servo-controlled arms. Virtual X,Y,Z axis corresponding to movement in 3D space can be defined and used to map the corresponding motion in along the virtual axis to the real axis of the servo-controlled arms.

While it is considered that each position cam object corresponds to a position cam for a control axis, it is possible for motion of a single control axis to be defined by a plurality of position cam objects. Additionally, or alternatively, a single position cam object can define the motion for a plurality of different control axis.

The output cam objects 308 can be associated with respective actuators. An output cam object can define one or more actuator control instances that each specify the latching/unlatching or turning on/off of the associated actuator. Each actuator control instance can specify when and how to control the associated actuator. While it is possible to define specific position or timings of the master cam signal for controlling the actuator, it is also possible to define the actuator control relative to one or more of the position segments of a position cam object. For example, a control instance of an output cam object may link the latching of the actuator to a position cam segment. Accordingly, if the position cam segment is adjusted, the output cam instance is automatically adjusted.

User interface (UI) functionality 310 may be provided that can generate a user interface to allow the user to create, view, modify and otherwise control the configuration of the automation station. The UI functionality may include cam display functionality 312 that can generate and display corresponding representations of the position cam objects and the output cam objects. The representations may be provided in various ways.

The cam config file generation functionality 302 may include cam export functionality 314 that can create the cam config files 316 based on the cam objects 304. The generated config files 316 may then be used by PLC loading functionality 318 to load the generate files onto the PLC. The specific format of the config files may vary depending upon the requirements of the PLC used to control the automation station. In addition to the cam config files, the cam export may export the cam objects to one or more other formats, depicted as cam tables 322.

In addition to providing a UI that can be used to create and modify cam objects 304, the cam config file generation functionality 302 may further include cam import functionality 324 that can create, or update, position cam objects and output cam objects based on existing cam tables 328 which may have been previously created, or existing cam config files 326 such as from a PLC. It is possible that the PLC may allow the cam config files to be modified within the PLC. For example a user may adjust one or more parameters of the cam config files within the PLC, which may then be imported by the cam import functionality 324 in order to allow the cam objects to be viewed and modified.

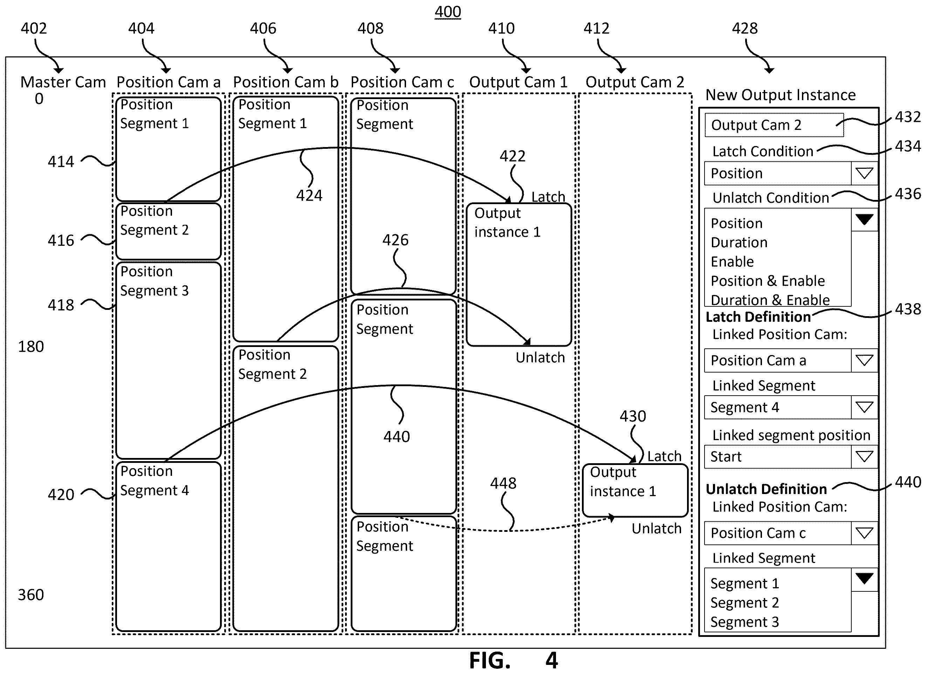

FIG. 4 depicts an illustrative user interface for configuring control of an automation station. The user interface functionality can present information in a plurality of different ways, with the user interface 400 depicted in FIG. 4 only one possible interface. The interface provides a representation of the master cam signal 402. As depicted, the master cam signal is represented as steps between 0° and 360°. Although depicted as being based on a 360° signal, it is possible to display other basis for the master cam such as a length measurement, or time.

The display 400 can display representations of a plurality of position cam objects 404, 406, 408. While the display depicts 3 position cam objects, it is possible to display fewer or additional position cam objects. Further, the position cam objects that are displayed may be filtered based on one or more features or characteristics of the position cam, such as a device associated with the particular position cam, a name of the position cam, position cam types, etc. As depicted for position cam a 404, the representation of each position cam includes one or more position segments 414, 416, 418, 420. The position cam segments define respective motions of the axis. The individual segments of the position cam objects represented in the display can be defined in various ways. For example, a segment can define different types of motion between two points, such as linear motion, "S" type motion, 5^{th} degree motion, or other types of motion. The segments may be generated using a graphical interface that allows a user to select the different types of motion or specify the motion in other ways. Further, the individual segments may be imported from one or more external sources. Regardless of how the position segments and position cam objects are defined or created, they may be edited in the user interface, including changing basic parameters such as names, descriptions, etc. as well as other parameters such as start/stop timing or positioning, etc. The individual segments may be edited using text based inputs or may be edited using graphical inputs such as clicking, dragging, dropping, etc. a segment to change one or more of the parameters. As depicted in FIG. 4, a position cam object includes one or more position segments that define the position of the axis over the entire automation cycle. That is, each position cam object defines the position of the respective controlled axis over the entire 360° of the automation cycle.

In addition to the position cam objects that are displayed, the user interface may also provide representations 410, 412 of one or more output cam objects associated with respective actuators. Each of the output cam objects may define one or more instances of the actuator control 422. Each instance can define the latching and unlatching, or on/off, activating/deactivating, characteristics for the instance. As depicted, each latching and unlatching may be linked to a segment of a position cam object. For example, the latching of the output instance 422 is depicted by arrow 424 as being linked to position cam object a's segment 416. Similarly, the unlatching is depicted by arrow 426 as being linked to position segment 2 of position cam object b.

FIG. 4 depicts an instance of output cam object 2 being defined. As depicted the latching condition may be linked, as depicted by arrow 440, to position segment 4 of position cam object a. When defining the instance, an input panel 428 may allow the user to define or edit the various characteristics of the instance. As depicted, the input panel may allow a user to define a name of the output instance, a latching condition 434, an unlatching condition 436. As depicted, the conditions may be selected from a drop down list; however, it will be appreciated that the latching and unlatching conditions can be defined in other ways. In addition to defining the latching and unlatching types, the input panel may also allow other parameters to be specified such as the I/O pin associated with the actuator controlled by the output cam. The I/O pin may be specified for individual instances or may be specified for an output cam object. Additional parameters may be defined for each output cam object or for each instance including for example, a description of the instance, tags, etc. The latch and unlatch definitions 438, 440 can also be defined. The particular definition presented may depend upon the selection of the latching/unlatching types. For example, as depicted if the latching/unlatching condition is based on the position, the particular position along the master cam signal can be specified. The position can be specified in various ways, including by explicitly providing the position, linking to the position of another feature such as a position segment or possibly other output cam instance. For example, the latching can be linked to a particular position cam and segment as well as the position within the segment using dropdown menus or other interface components. The linked segment position may be specified as for example being the start of the particular cam segment, the middle of the particular cam segment or the end of the particular cam segment. The position may also include an offset from a specified or linked position. As depicted, the linking of positions to other features may be specified using drop down lists or in other ways such as clicking on a desired feature. It is possible for the input panel to specify additional characteristics such as enable bit information, when applicable. For example, the input panel may allow an enable bit to be specified that is used to control the latching/unlatching. In addition to specifying the enable bit, it is possible to specify the enable bit type, which may be for example using the enable bit directly, or using an inverted version of the enable bit.

As depicted, the interface functionality can provide graphical representations of the position cam objects and output cam objects. If an output cam object has instances that are linked to other features such as position segments, if those position segments are adjusted, the display of the linked output cam object instances can also be updated.

Although not depicted in FIG. 4, the user interface may provide access to other functionality including functionality for importing position cams and output cams as well as exporting the position cam objects and output cam objects to config files which may be loaded to the PLC. When exporting configuration files it may be possible to only export certain portions of the position cam objects and output cam objects. For example, certain cam objects may be disabled or marked as inactive. Specifying certain cam objects as inactive may allow testing or configuring an automation station easier as it allows portions to be tested and verified without having to completely remove cam objects.

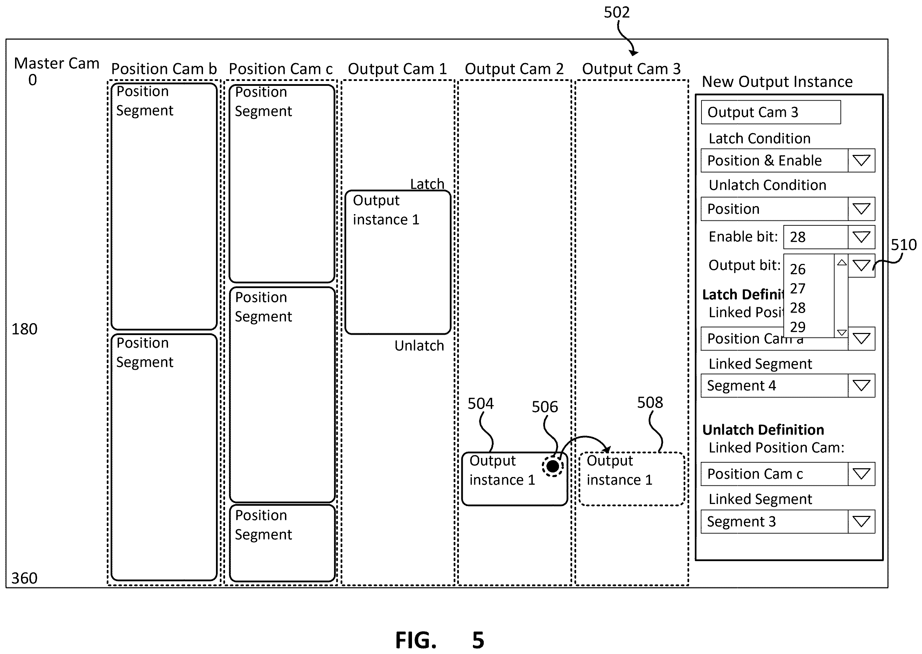

FIG. 5 depicts a further illustrative user interface for configuring control of an automation station. The display 500 is similar to that of FIG. 4 however a new output cam object is being defined as represented by the output cam object representation 502. The output cam objects may be defined in various ways. As depicted in FIG. 5, an instance may be copied from other output cam instances. For example output cam instance 504 may be dragged and dropped 506 to create a new output instance 508. The new output instance may copy the various parameters of the output instance being copied. Once copied, parameters can be edited as required. For example, the latching/unlatching conditions can be changed, the enable bit changed and the output bit 510 changed. As will be appreciated, different output cam objects may control different actuators which are connected to different I/O ports and as such the output bit may be used to specify which of the I/O ports is used for the actuator.

As depicted in FIGs. 4 and 5, the user interface functionality described above can generate and display a representation of the position and output cam objects and allow a user to create and adjust the parameters of the cam objects. The user interface allows the output cam objects to be linked to other features such as position cam object segments and have output cam objects automatically updated if the position cam objects are modified.

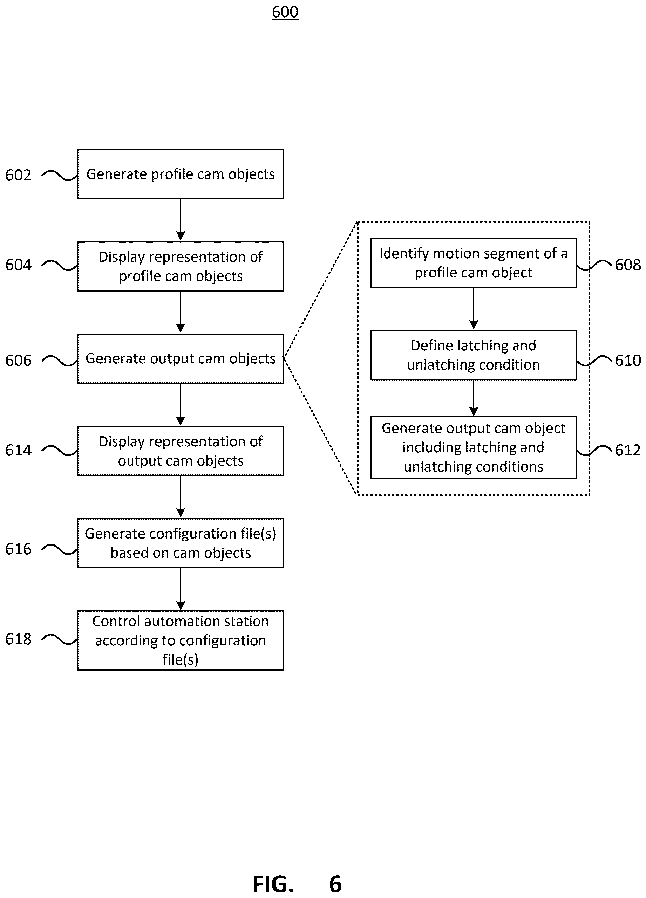

FIG. 6 depicts a method for configuring control of an automation station. The method 600 begins with generation of a position cam object (602). One or more position cam objects may be generated. The position cam objects may be generated by importing existing configuration files or position cam tables, or may be specified directly by the user. Each of the one or more position cam objects comprise one or more motion segments specifying a position of a respective servo controlled axis at one or more time intervals. A visual representation of the position cam objects can be displayed (604). One or more output cam objects can be generated (606). The one or more output cam objects are each associated with a respective actuator and define the latching/unlatching characteristics of the actuator and can be generated in various ways, including by linking the latching or unlatching of the actuator to a portion of a position cam object. In order to link an instance of an output cam object to a position cam object, a motion segment of a position cam object, which may be displayed, can be identified (608), for example by selecting one of the displayed segments. Latching and unlatching conditions can be defined (610). At least one of the latching and unlatching conditions may be linked to the identified segment of the position cam object. The position of the latching or unlatching relative to the master cam signal may be the start or stop position of the linked segment or may be offset from the linked segment by a specified amount or duration. The output cam object can be generated including the specified latching and unlatching conditions (612). Once the output cam objects have been generated, representations of the output cam objects can be displayed (614). The position cam objects and output cam objects that may be displayed may be edited by the user in order to adjust the parameters and operation of the automation station. The cam objects may be used in simulations of the automation station. Once the automation station parameters are set, the corresponding configuration files for configuring the automation station can be generated (616). Once generated, the configuration files are loaded to the controller (618) of the automation station and used to control the automation station. The one or more configuration files specify control information for the automation station at a plurality of time intervals of a cycle of the automation station. If the configuration is adjusted in the controller, the adjusted configuration files can be imported back into the user interface and used to adjust the position cam objects and output cam objects according to the adjustments made in the controller.

It will be appreciated by one of ordinary skill in the art that the system and components shown in FIGs. 1 - 6 may include components and/or steps not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as defined in the claims.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one, more or all of the steps of the described method or methods.

Some embodiments are directed to a computer program product comprising a computer-readable medium comprising code for causing a computer, or multiple computers, to implement various functions, steps, acts and/or operations, e.g. one or more or all of the steps described above. Depending on the embodiment, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the method(s) described herein. The processor may be for use in, e.g., a communications device or other device described in the present application.

Numerous additional variations on the methods and apparatus of the various embodiments described above will be apparent to those skilled in the art in view of the above description. Such variations are to be considered within the scope of the current disclosure.

## Claims

1. A method of configuring an automation station comprising:
generating one or more position cam objects of servo controlled axes of the automation station, each of the one or more position cam objects comprising one or more motion segments specifying a position of the respective servo controlled axis at one or more time intervals;
displaying a representation of at least one of the one or more position cam objects on a graphical display;
generating one or more output cam objects by, for each output cam object:
identifying a motion segment of the one or more motion segments of one of the one or more position cam objects;
defining a latching condition and an unlatching condition, at least one of the latching and unlatching condition based on the identified motion segment; and
generating the output cam object including the defined latching condition and the unlatching condition;
displaying a representation of the output cam objects on the graphical display;
generating one or more configuration files based on the one or more position cam objects and one or more output cam objects, the one or more configuration files specifying control information for the automation station at a plurality of time intervals of a cycle of the automation station; and
controlling the automation station according to the generated one or more configuration files.

2. The method of claim 1, wherein the latching and unlatching condition based on the identified motion segment is further defined by an offset of the identified motion segment.

3. The method of claim 1 or 2, wherein latching conditions of the one or more output cam objects are defined based on one or more of:
a position of a master cam signal;
a specified enable bit; and
a combination of the position of the master cam signal and the specified enable bit.

4. The method of any one of claims 1 to 3, wherein unlatching conditions of the one or more output cam objects are defined based on one or more of:
a position of a master cam signal;
a specified enable bit;
a duration;
a combination of the position of the master cam signal and the specified enable bit; and
a combination of the duration and the specified enable bit.

5. The method of any one of claims 1 to 4, wherein generating at least one of the one or more position cam objects comprises importing a position cam from an existing configuration file.

6. The method of any one of claims 1 to 5, further comprising generating a new output cam object by:
selecting a displayed representation of an existing output cam object;
generating the new output cam object based on the selected existing output cam object; and
adjusting one or more characteristics of the new output cam object.

7. An automation station comprising:
a plurality of servos;
one or more actuators;
a controller configurable for controlling the plurality of servos and the one or more actuators;
a computing device configured to configure the controller according to one or more configuration files, the computing device configured to perform a method comprising:
generating one or more position cam objects of servo controlled axes of the automation station, each of the one or more position cam objects comprising one or more motion segments specifying a position of the respective servo controlled axis at one or more time intervals;
displaying a representation of at least one of the one or more position cam objects on a graphical display;
generating one or more output cam objects by, for each output cam object:
identifying a motion segment of the one or more motion segments of one of the one or more position cam objects;
defining a latching condition and an unlatching condition, at least one of the latching and unlatching condition based on the identified motion segment; and
generating the output cam object including the defined latching condition and the unlatching condition;
displaying a representation of the output cam objects on the graphical display;
generating one or more configuration files based on the one or more position cam objects and one or more output cam objects, the one or more configuration files specifying control information for the automation station at a plurality of time intervals of a cycle of the automation station; and
controlling the automation station according to the generated one or more configuration files.

8. The automation station of claim 7, wherein the latching and unlatching condition based on the identified motion segment is further defined by an offset of the identified motion segment.

9. The automation station of claim 7 or 8, wherein latching conditions of the one or more output cam objects are defined based on one or more of:
a position of a master cam signal;
a specified enable bit; and
a combination of the position of the master cam signal and the specified enable bit.

10. The automation station of any one of claims 7 to 9, wherein unlatching conditions of the one or more output cam objects are defined based on one or more of:
a position of a master cam signal;
a specified enable bit;
a duration;
a combination of the position of the master cam signal and the specified enable bit; and
a combination of the duration and the specified enable bit.

11. The automation station of any one of claims 7 to 10, wherein generating at least one of the one or more position cam objects comprises importing a position cam from an existing configuration file.

12. The automation station of any one of claims 7 to 11, further comprising generating a new output cam object by:
selecting a displayed representation of an existing output cam object;
generating the new output cam object based on the selected existing output cam object; and
adjusting one or more characteristics of the new output cam object.

13. A non-transitory computer readable medium storing thereon instructions which when executed by a processor configure the processor to perform a method according to any one of claims 1 to 6.
